# EUROPEAN PATENT APPLICATION

(11) **EP 4 473 833 A1**
(43) Date of publication of application: **11.12.2024**
(21) Application number: 24180483.0
(22) Date of filing: 06.06.2024
(51) Int. Cl.: A01M 7/00

(54) **AGRICULTURAL EQUIPMENT FOR PHYSICALLY REMOVING INSECTS**

(30) Priority: 08.06.2023 IT 202300011775
(71) Applicant: Pasini, Michele, 25010 San Zeno Naviglio, (BS) (IT)
(72) Inventor: Pasini, Michele, 25010 San Zeno Naviglio, (BS) (IT)
(74) Representative: Chimini, Francesco

(57) **Abstract**

Agricultural equipment 1 for physically removing crop-infesting insects, comprising an air flow generating group 3 comprising delivery means to generate a delivery air flow and suction means to generate a suction air flow, at least one operating group 4 fluidically connected to the air flow generating group 3, wherein one or more operating groups are configured, individually or in combination, to direct the blowing flow onto the crops and suck up the insects removed from the crops, and a collection tank 5 suitable for accommodating the insects sucked and removed from the crops.

## Description

The present invention belongs to the field of agriculture and relates to a piece of agricultural equipment for physically removing crop-infesting insects.

In the state of the art, devices are known for physically removing insects exclusively based on the suction mechanism through the flow of air created by fans.

A typical problem affecting the insect suction systems of the prior art is that sometimes the suction mechanism alone is not effective as some insects, especially parasites, can be firmly anchored to the trunk, branches, leaves or fruits and thus be difficult to move by means of the air suction flow alone. Therefore, the suction systems of the prior art are not effective in removing insects on crops.

There is a strong need to improve the process of removing insects from crops, also with a view to precision agriculture.

It is the object of the present invention to suggest a piece of agricultural equipment for physically removing crop-infesting insects which solves the problems of the prior art taking into account the industry needs.

It is a further object of the present invention to provide a piece of agricultural equipment for removing insects capable of eliminating, or at least reducing, the use of chemical insecticides that are harmful for both the crop on which they are applied and the end user who will consume the product and pollute the environment.

These objects are achieved by the agricultural equipment for removing insects claimed in claim 1. The dependent claims describe preferred or advantageous embodiments of the system for removing insects.

Additionally, further features and advantages of the invention will become however apparent from the following description of preferred embodiments thereof, given by way of non-limiting indication, with reference to the accompanying drawings, in which:
- Figure 1a shows a front perspective view of the agricultural equipment according to an embodiment;
- Figure 1b shows a rear perspective view of the agricultural equipment according to an embodiment;
- Figure 1c shows a front perspective view of the agricultural equipment according to a second embodiment in which the connection means that connect the components of the agricultural equipment are shown;

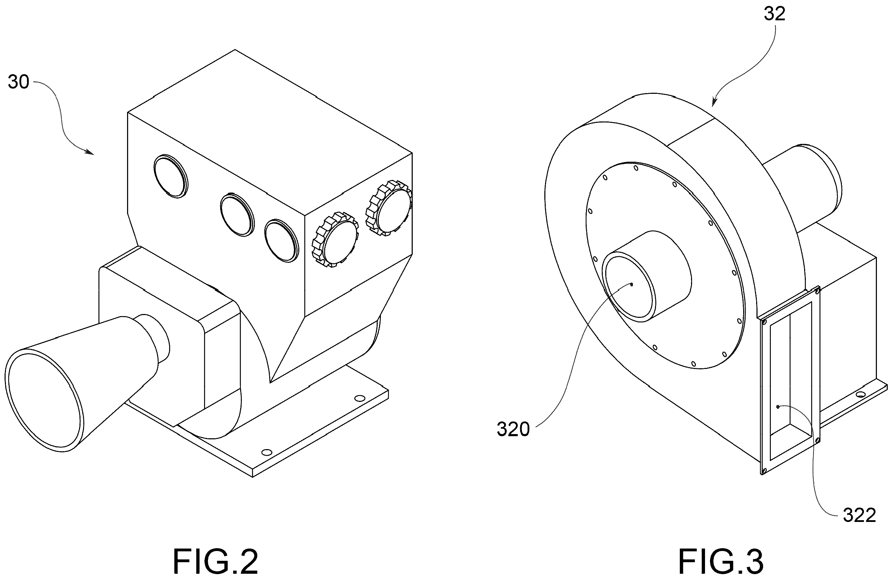

- Figure 2 shows a generator device of the agricultural machine, according to an embodiment;
- Figure 3 shows a suction device of the agricultural machine, according to an embodiment;

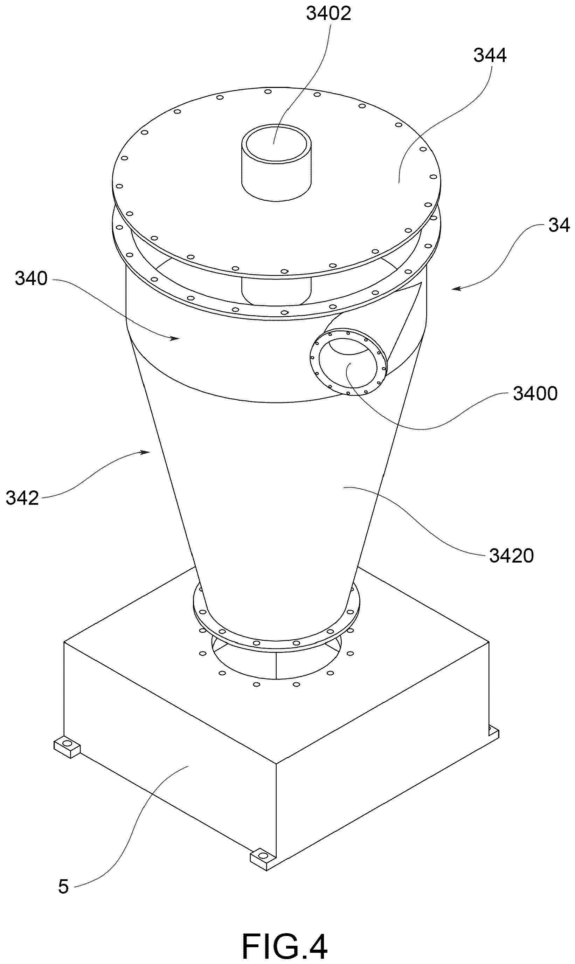

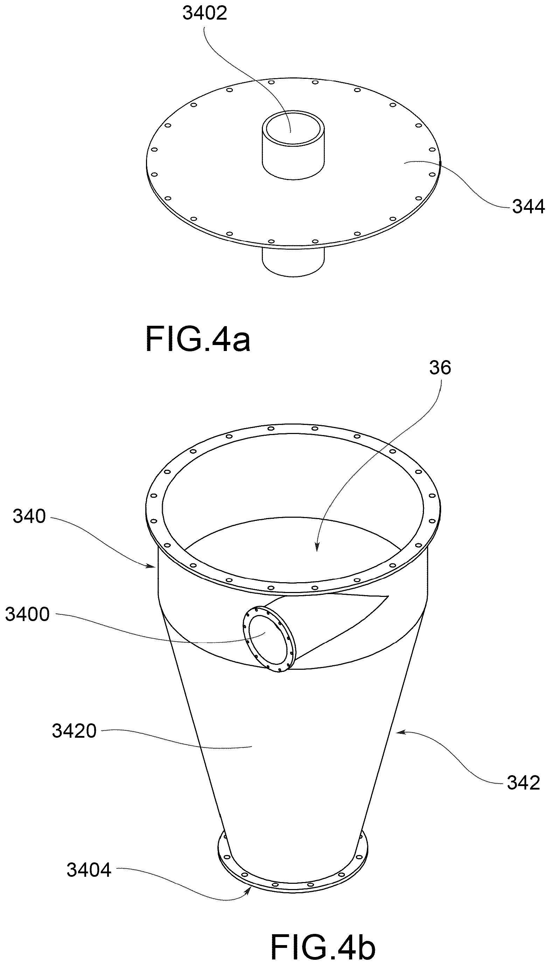

- Figure 4 shows the fluidic connection of a separator device with a collection tank of the agricultural machine, according to an embodiment;
- Figure 4a shows a closing body of the separator device according to an embodiment;
- Figure 4b shows an upper portion and a central portion of the separator device according to an embodiment;

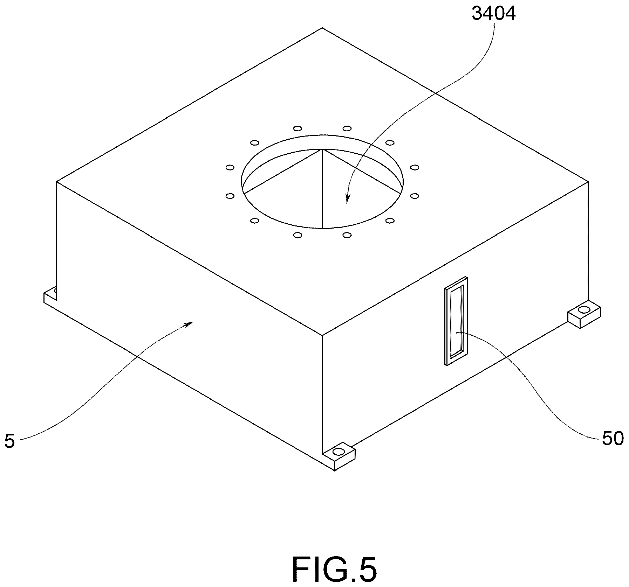

- Figure 5 shows a collection tank of the agricultural machine, according to an embodiment;

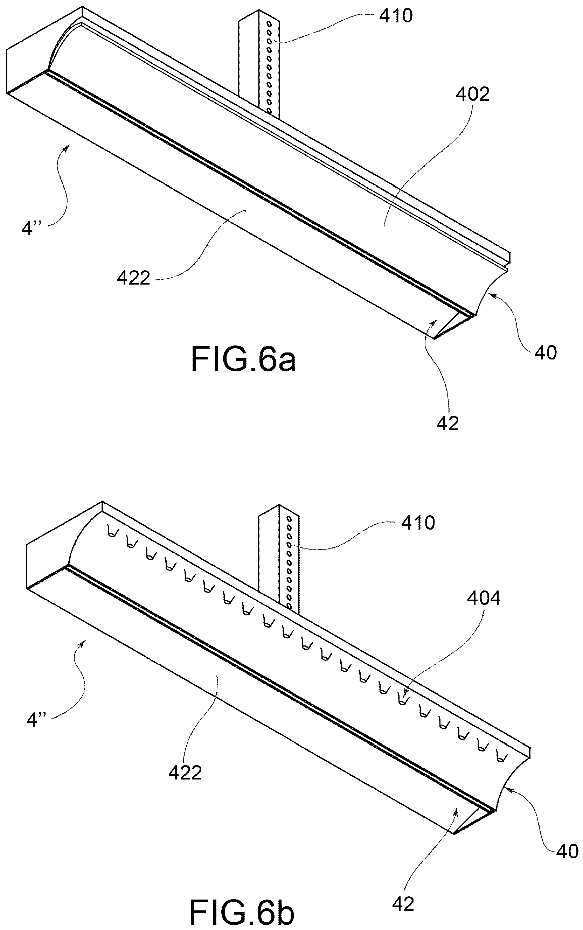

- Figure 6a shows an operating group of the agricultural machine, according to an embodiment;
- Figure 6b shows another operating group of the agricultural machine, according to an embodiment;

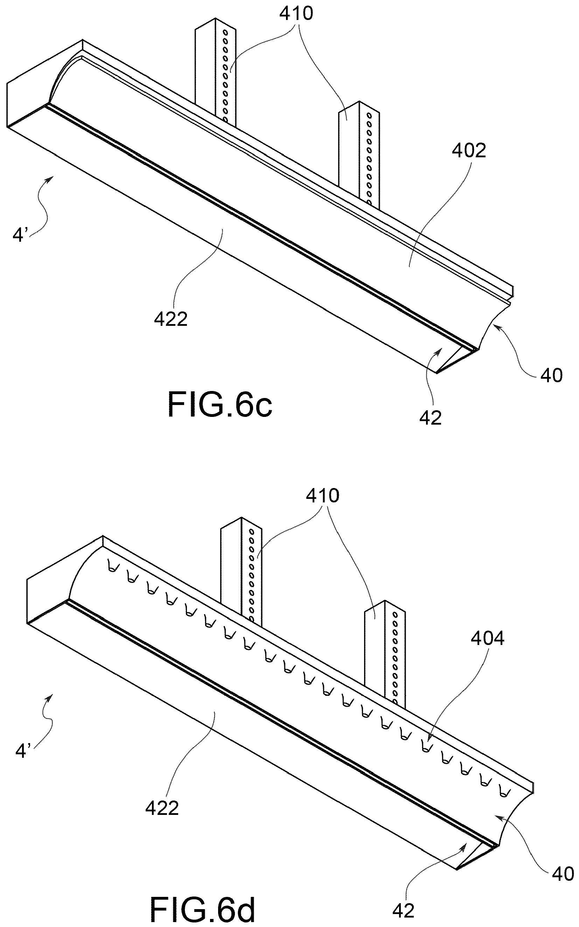

- Figures 6c and 6d show embodiments of the operating groups in Figures 6a and 6b, respectively;
- Figure 7 shows the agricultural equipment in the portable version, according to an embodiment.

With reference to the accompanying drawings, reference numeral 1 indicates as a whole a piece of agricultural equipment for physically removing insects, according to the invention.

The agricultural equipment 1 comprises automotive means 12 or connection means 14 for the connection with an automotive unit 2, e.g., an agricultural tractor.

In an embodiment, the connection means 14 are suitable for engaging the three standard coupling points of a conventional tractor 2. Therefore, in this embodiment, the agricultural equipment 1 is configured to be transported by a conventional tractor.

In a further embodiment, the agricultural equipment 1 comprises automotive means 12 in the form of a remotely controllable autonomous vehicle, i.e., self-driving, which will be described in more detail below.

The agricultural equipment 1 comprises an air flow generating group 3, at least one operating group 4 and a collection tank 5.

According to an embodiment, the air flow generating group 3 and the collection tank 5 are contained inside the load-bearing structure 10.

The air flow generating group 3 comprises delivery means to generate a delivery air flow and suction means to generate a suction air flow. In other words, the air flow generating group 3 is configured to generate a blown air flow and a sucked air flow.

Preferably, the delivered air flow is a negative pressure air flow. Preferably, the sucked air flow is a positive pressure air flow.

According to an embodiment, the delivery means and the suction means comprise a sucker device 32 and a separator device 34 fluidically connected to said sucker device 32. The separator device 34 is suitable for performing an operation of separating the insects present in the suction flow.

According to an embodiment, the separator device 34 is a cyclone separator.

According to a further embodiment, the delivery means comprise a delivery compressor device 52 suitable for generating a flow of compressed air and a delivery pressure variation device 54 suitable for modifying the pressure, and thus the speed, of the air flow crossing it. The delivery compressor device 52 is fluidically connected to the delivery pressure variation device 54 by delivery compression connection means 520. As a matter of fact, the compressed air flow generated by the delivery compressor device 52 enters the delivery pressure variation device 54, which determines an increase in speed thereof so as to generate the blowing flow.

According to a further embodiment, the suction means comprise a suction compressor device 62 suitable for generating a flow of compressed air at high speed and a suction pressure variation device 64 suitable for modifying the pressure, and thus the speed, of the fluid crossing it. The suction compressor device 62 is fluidically connected to the suction pressure variation device 64 by suction compressor connection means 620. As a matter of fact, the suction compressor device 62 generates a flow of compressed air at high speed such as to generate a negative pressure inside the suction compressor connection means 620, which generates a suction action of the air flow from the outside. The sucked air flow from the outside transits through the suction pressure variation device 64.

According to an embodiment, the delivery pressure variation device 54 is a Venturi system.

According to an embodiment, the suction pressure variation device 64 is a Venturi system.

According to an embodiment, the air flow generation group 3 also comprises an electricity generator device 30 electrically connected to a sucker device 32. The electricity generator device 30 is suitable for generating the electricity necessary for the operation of the sucker device 32.

In an embodiment, the electricity generator device 30 is a cardan generator. According to an embodiment, the electricity generator device 30 is connected to the cardan of the agricultural tractor 2 for generating electricity through the engine of the agricultural tractor 2 itself.

In a further embodiment, particularly compliant with the requirements of 4.0 agriculture, the electricity generator device 30 is a generator connected to a battery system or to a solar panel system installed on the agricultural tractor 2.

The agricultural equipment 1 further comprises a collection tank 5 fluidically connected to the separator device 34 and suitable for housing the insects sucked and removed from the crops.

The sucker device 32 comprises a suction inlet opening 320 and a suction outlet opening 322 suitable for creating a fluidic connection with the separator device 34 and the at least one operating group 4, respectively.

The sucker device 32 has the function of sucking the air present inside the separator device generating a flow of air at the outlet. The flow of air generated by the sucker device 32 is the delivery air flow used for the operation of blowing the insects present on the crop.

At the same time, by sucking air into the separator device 34, the sucker device 32 generates a negative pressure inside the separator device 34. The negative pressure generated inside the separator device 34 allows generating the suction air flow because it attracts an air flow from the outside into the separator device 34. In other words, the fluidic connection between the sucker device 32 and the separator device 34 also allows implementing the operation of sucking the air flow from the outside containing insects.

In the following description, the term "dirty suction air flow" refers to the suction air flow containing insects.

Once the dirty suction air low enters the separator device 34, the dirty suction air flow undergoes a separation operation, in which the insects are separated from the air flow so as to obtain a clean air flow at the outlet, free from insects.

In the following description, the term "clean air flow" refers to the air flow obtained after the insects contained in the dirty suction air flow have been separated through the separation operation.

According to an embodiment, the clean air flow exiting the separator device is sucked by the sucker device to determine the blowing air flow.

The separation operation consists of subjecting the dirty suction air flow to a centrifugal force developed by the whirling motion imposed by the separator device 34, where the centrifugal force determines the distribution of the insects against the wall of the separator device 34. Once the insects have been separated from the dirty suction air flow, they are pushed towards the wall of the separator device and, due to the force of gravity, are dragged downwards, i.e., towards the collection tank 5. In other words, the separator device 34 imposes a centrifugal force on the dirty suction air flow such as to separate the insects and, thus, distribute them onto the wall of the separator device 34, then dragging them by the force of gravity towards the collection tank 5.

According to an embodiment, the collection tank 5 contains a collection fluid suitable for collecting the sucked insects. Preferably, the collection fluid is water.

According to an embodiment, the separator device 34 comprises an upper portion 340, a central portion 342, fluidically connected to the upper portion 340, and a closing body 344. An inlet mouth 3400 is obtained in the upper portion 340 and an outlet mouth 3402 is obtained in the closing body 344.

The central portion 342 comprises a conical annular wall 3420 which defines a chamber 36 in which the process of separating the insects from the dirty suction air flow entering the separator device 34 through the inlet mouth 3400 takes place.

Moreover, the central portion terminates with an opposite collection mouth 3404 with respect to the upper portion 340 suitable for fluidically connecting the separator device 34 to the collection tank 5. The collection tank 5 is suitable for collecting the insects separated from the incoming dirty suction air flow.

The collection tank 5 comprises a tank opening 50 for removing the collection fluid containing the insects sucked by the suction air flow.

As mentioned above, the separator device 34 is fluidically connected to the sucker device 32 by suction connection means 600, e.g., tubes. In particular, the suction connection means 600 are suitable for establishing a fluidic connection between the suction inlet opening 320 of the sucker device 32 and the outlet mouth 3402 of the separator device 34. The outlet mouth 3402 is suitable for ensuring the exit of the clean air flow, obtained following the separation process, by means of the negative pressure created by the sucker device 32.

The at least one operating group 4 is fluidically connected to the air flow generation group 3. One or more operating groups 4 are configured, individually or in combination, to direct the blowing flow onto the crops and suck up the insects removed from the crops.

In other words, in an embodiment, each operating group 4 is configured to perform both the blowing and sucking functions, i.e., both to direct the blowing flow onto the crops and to suck the insects removed from the crops.

In other embodiments, one or more operating groups 4 are only configured to direct a blowing flow onto the crops, whereas one or more other operating groups 4 are only configured to suck the insects removed from the crops.

According to an embodiment, the at least one operating group 4 comprises at least one blowing mouth 40 for the delivery flow and at least one suction mouth 42 for the suction flow. According to this embodiment, i.e., where the at least one blowing mouth 40 is separate from the at least one suction mouth 42, the suction operation and the blowing operation are simultaneous. In other words, when the two suction and blowing mouths are distinct, once the process has started, the blowing operation is simultaneous to the suction operation.

According to a further embodiment, the at least one blowing mouth 40 coincides with the at least one suction mouth 42. In other words, the operating group 4 has a single mouth which operates alternately as a blowing mouth and a suction mouth. In this case, the agricultural equipment 1 is provided with diverter means that alternatively connect the single mouth with the delivery means and the suction means.

The at least one blowing mouth 40 has the function of directing the delivery flow in a desired blowing direction in which it is necessary to detach the insects present on the crop. In other words, the at least one blowing mouth 40 ensures the exit of the delivery air flow in a certain blowing direction so as to make the operation of removing the insects from the crop effective.

The at least one suction mouth 42 has the function of sucking the air flow comprising the insects that were previously detached by the blowing air flow. As a matter of fact, once the insects have been detached from the crop by the delivery air flow, they are sucked by the suction mouth 42.

The agricultural equipment 1 further comprises operating group connection means 400 suitable for ensuring the transfer of the insect-containing suction air flow, i.e., the dirty suction air flow, to the separator device 34. The inlet mouth 3400 of the separator device 34 is fluidically connected to the at least one suction mouth 42 of the at least one operating group 4. In other words, the operating group connection means 400 ensure the transfer of the dirty suction air flow inside the chamber 36 of the separator device 34, in which the insect separation operation takes place. Preferably, the operating group connection means 400 are tubes.

The agricultural equipment 1 further comprises sucker connection means 600 suitable for ensuring the fluidic connection between the at least one outlet mouth 3402 of the separator device 34 and the suction inlet opening 320 of the sucker device 32. The sucker device 32 is suitable for sucking the clean suction air flow at the outlet mouth 3402 of the separator device 34. Preferably, the suction connection means 600 are tubes.

The agricultural equipment 1 further comprises blowing connection means 700 suitable for ensuring a fluidic connection between the suction opening 322 of the sucker device 32 and the at least one blowing mouth 42 of the at least one operating group 4. The sucker device 32 generates the blowing flow required to be directed towards the crop. Preferably, the blowing connection means 700 are tubes.

According to an embodiment, the blowing mouth 40 is obtained by at least one movable laminar wall 402 extending over the entire length of the blowing mouth 40. The at least one laminar wall 402 is suitable for closing and/or opening the blowing mouth so as to direct the blowing air flow in the desired direction. Preferably, the laminar wall 402 is concave in shape.

According to an embodiment, the blowing mouth is obtained by a plurality of nozzles 404 suitable for blowing the air flow from the suction device 32.

According to a further embodiment, the blowing mouth comprises at least one laminar wall 402 and a plurality of nozzles 404.

According to an embodiment, the suction mouth 42 is obtained by at least one movable laminar suction wall 422 extending over the entire length of the suction mouth 42. Preferably, the at least one laminar suction wall 422 is inclinable. As a matter of fact, the at least one laminar suction wall 422 is suitable for being inclined to adjust the suction power of the dirty suction air flow.

The agricultural equipment 1 also comprises operating group fastening means 100 suitable for mechanically connecting the at least one operating group 4 to a load-bearing structure 10 of the agricultural equipment 1. In an embodiment, these operating group fastening means 100 comprise at least one fastening structure 410 connected to the at least one operating group 4 and an arm 120. The arm 120 is suitable for connecting the fastening structure 410 to the load-bearing structure 10.

According to an embodiment, the arm 120 is a fixed arm 120a with respect to the load-bearing structure 10, i.e., the position of the at least one operating group 4 is fixed with respect to the load-bearing structure 10.

According to an embodiment, the arm 120 is a movable arm 120b with respect to the load-bearing structure 10, i.e., the position of the at least one operating group 4 is movable with respect to the load-bearing structure 10.

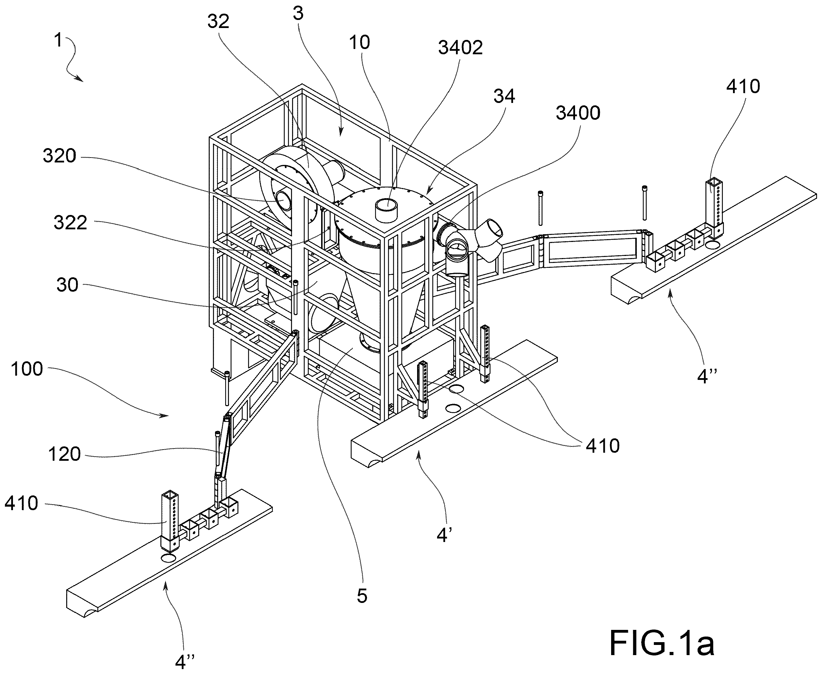

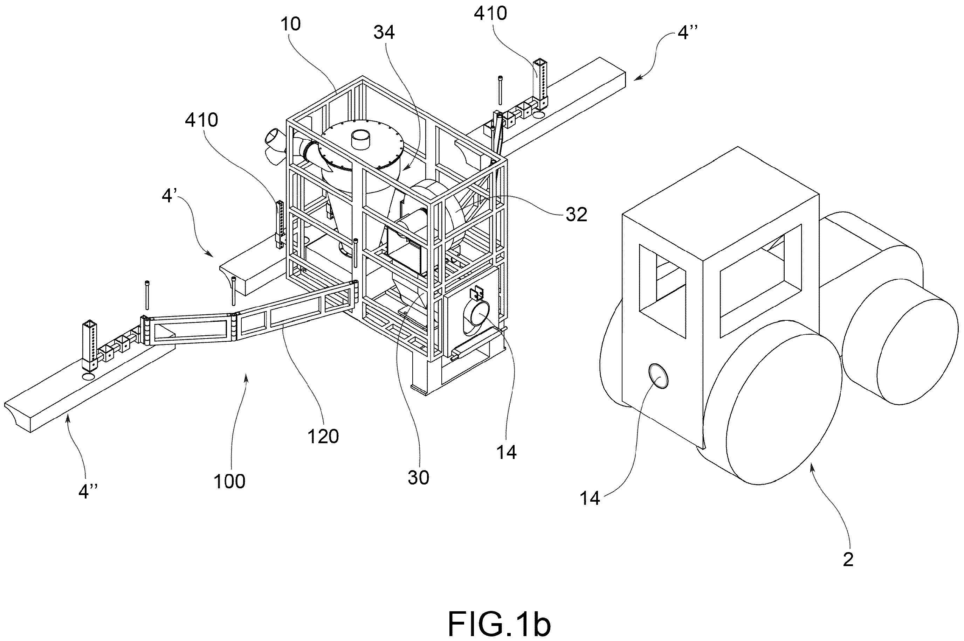

As shown in Figures 1a and 1b, the fixed arm 120a and the movable arm 120b are coupled to the fastening structure 410 by shape coupling.

As shown in Figures 1a and 1b, the movable arm 120b is rotatable about fastening means 110, for example a pin, in a horizontal plane "A" parallel to the ground.

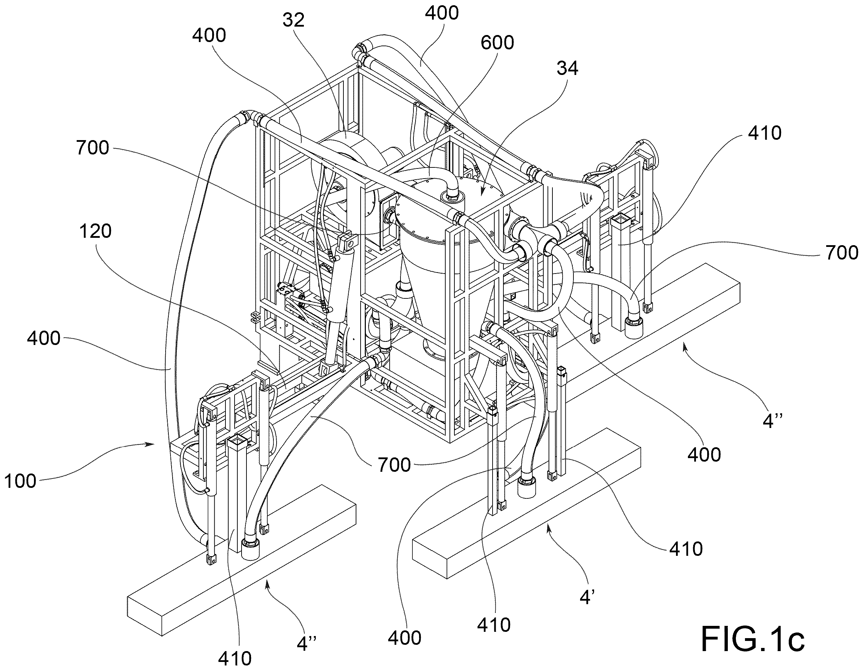

As shown in Figure 1c, the movable arm 120b is movable in a vertical plane "V" orthogonal to the ground. In particular, the movable arm 120b is movable in height with respect to the ground. In other words, the fastening means 110 are suitable for ensuring a raising or lowering of the at least one operating group 4 with respect to the ground. Preferably, the fastening means 110 and the fastening structure 410 can be made by means of a piston system 510'.

According to the embodiments shown by way of example in Figures 1a-1c, the fixed arm 120a and the movable arm 120b are coupled to the fastening structure 410.

According to an embodiment, the agricultural equipment 1 comprises a front operating group 4' and at least one side operating group 4'', e.g., two side operating groups. According to this embodiment, the front operating group 4' is connected to the load-bearing structure 10 by the fixed arm 120a with respect to said load-bearing structure 10 and the at least one side operating group 4'' is connected to the load-bearing structure 10 by the movable arm 120b with respect to the load-bearing structure 10.

The agricultural equipment 1 described above is also manufacturable in a portable version with small dimensions. As a matter of fact, the agricultural equipment 1 can be made in a version that includes a structure wearable on the user's shoulders and/or in a version including a structure suitable for being dragged on the ground by the user.

The agricultural equipment 1 in the portable agricultural equipment version 1' comprises an electricity generator device 30, a sucker device 32, a separator device 34 and a collection tank 5. The electricity generator device 30 is suitable for powering the sucker device 32.

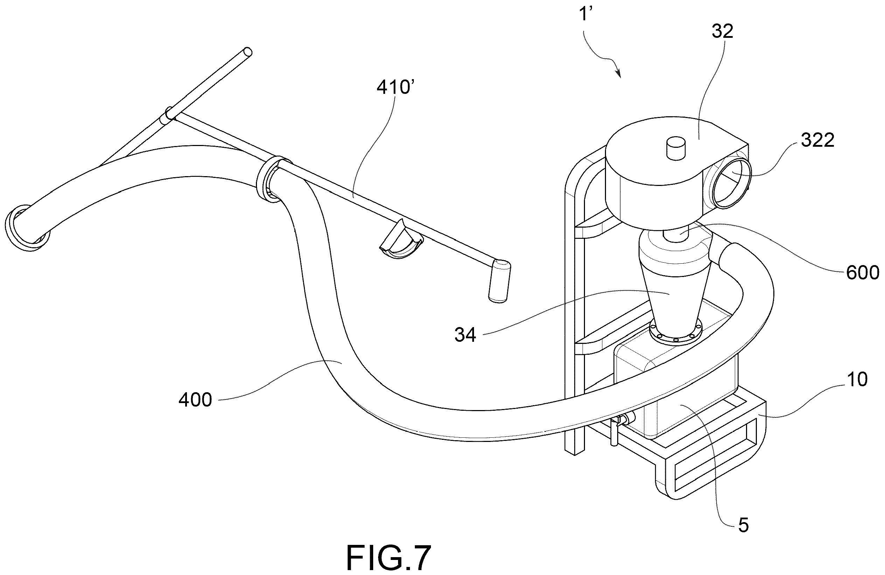

As shown in Figure 7, the sucker device 32 is positioned above the separator device 34 to which it is fluidically connected through the outlet mouth 3402 of the separator device. In turn, the separator device 34 is positioned above the collection tank 5 to which it is fluidically connected through the collection mouth 3404. In other words, the sucker device 32, the separator device 34 and the collection tank 5 are connected fluidically in cascade from the top downwards, respectively.

The above-described devices connected in cascade are housed in a portable load-bearing structure 10'.

According to an embodiment, the portable load-bearing structure 10' comprises dragging means 16, e.g., wheels, suitable for ensuring that the portable agricultural equipment can be pulled by the user.

According to a further embodiment, the portable load-bearing structure 10' comprises coupling means 18 suitable for being transported on the user's shoulders.

According to an embodiment, the portable structure comprises the combination of dragging means 16 and coupling means 18 so that the user has the possibility to choose the most appropriate method to use.

The portable agricultural equipment 1' comprises operating group connection means 400 suitable for ensuring the transfer of the dirty suction air flow from the outside to the inlet mouth 3402 of the separator device 34.

Preferably, the operating group connection means 400 are a suction tube connected to a support structure 410' suitable for being anchored to a user's arm. In other words, the user can manually move the suction tube by the movement of the support structure anchored to his/her arm.

The portable agricultural equipment 1' comprises blowing connection means 700 suitable for ensuring and directing the exit of the blowing air flow towards the external environment. Preferably, the blowing connection means 700 comprise a blowing tube also connected to the support structure 410', adjacent to the suction tube 400.

According to a further embodiment, the blowing connection means comprise a blowing tube connected to a blowing support structure.

The type, and thus the diameter, of the tubes used varies as a function of the type of agricultural equipment to desired, i.e., whether the agricultural equipment connected to an agricultural machine or the portable agricultural equipment.

The agricultural equipment comprising delivery means and suction means allows obtaining the equipment to generate a blowing flow capable of blowing the insects present on the crop and a suction flow capable of sucking the insects previously detached from the crop, overcoming the typical problems of the prior art.

In an embodiment, the agricultural equipment is capable of generating a blowing flow and a suction flow only using a sucker device, i.e., the sucker device is capable of generating a negative pressure inside the separator device so that the negative pressure draws a further air flow into the separator device itself, which corresponds to the suction air flow containing the insects.

The agricultural equipment allows reducing the use of insecticides on crops as it ensures almost total removal of insects by the generation of air flows, resulting in a reduction of the impact of farming on the crops themselves.

The agricultural equipment allows implementing autonomously driven equipment powered by means of renewable energy, further reducing the environmental impact of the solution for removing insects from crops.

The collection tank containing a fluid allows withholding the sucked insects so as to avoid the dispersion thereof into the environment surrounding the crop, as they would end up returning onto the crop itself.

The agricultural equipment is also manufacturable in a portable version, allowing the same technical advantages as the drivable and/or self-driving vehicle version to be obtained.

The agricultural equipment allows manufacturing a versatile agricultural equipment, usable even for small crops that require greater precision.

It is apparent that, in order to meet contingent needs, those skilled in the art may make changes to the above-described invention, all contained within the scope of protection as defined by the following claims.

## Claims

1. Agricultural equipment (1) for physically removing crop-infesting insects, comprising:
- an air flow generating group (3) comprising delivery means to generate a delivery air flow and suction means to generate a suction air flow;
- at least one operating group (4) fluidically connected to the air flow generating group (3), wherein one or more operating groups are configured, individually or in combination, to direct the blowing flow onto the crops and suck up the insects removed from the crops;
- a collection tank (5) suitable for accommodating the insects sucked and removed from the crops.

2. Agricultural equipment (1) according to claim 1, wherein the delivery means and the suction means comprise a sucker device (32) and a separator device (34) fluidically connected to said sucker device (32), wherein said separator device (34) is suitable for performing an operation of separating the insects present in the suction flow.

3. Agricultural equipment (1) according to claim 2, wherein the sucker device (32) comprises a suction inlet opening (320) and a suction outlet opening (322) suitable for creating a fluidic connection with the separator device (34) and the at least one operating group (4), respectively.

4. Agricultural equipment (1) according to claim 2, wherein the separator device (34) comprises an upper portion (340), a central portion (342), fluidically connected to the upper portion (340), and a closing body (344), wherein an inlet mouth (3400) is obtained in the upper portion (340) and an outlet mouth (3402) is obtained in the closing body (344).

5. Agricultural equipment (1) according to claim 4, wherein the central portion (342) of the separator device (34) ends with a collection mouth (3404) suitable for fluidically connecting the separator device (34) to the collection tank (5), wherein said collection tank (5) is suitable for collecting the insects separated from the suction air flow.

6. Agricultural equipment (1) according to claim 1, wherein the at least one operating group (4) comprises at least one blowing mouth (40) for the delivery flow and at least one suction mouth (42) for the suction flow.

7. Agricultural equipment (1) according to claim 6, wherein the at least one blowing mouth (40) coincides with the at least one suction mouth (42).

8. Agricultural equipment (1) according to claim 6 or 7, wherein the at least one blowing mouth (40) is obtained by at least one movable laminar blowing wall (402) extending over the entire length of the at least one blowing mouth (40).

9. Agricultural equipment (1) according to claim 6, wherein the at least one blowing mouth (40) is obtained by a plurality of nozzles (404).

10. Agricultural equipment (1) according to claim 6 or 7, wherein the suction mouth (42) is obtained by at least one movable laminar suction wall (422) extending over the entire length of the suction mouth (42) suitable for being inclined to adjust the suction power of the dirty suction air flow.

11. Agricultural equipment (1) according to claims 4 and 7, comprising operating group connection means (400) suitable for ensuring the transfer of the insect-containing suction air flow to the separator device (34), wherein the inlet mouth (3400) of the separator device (34) is fluidically connected to the at least one suction mouth (42) of the at least one operating group (4).

12. Agricultural equipment (1) according to claims 3 and 4, comprising sucker connection means (600) suitable for ensuring the fluidic connection between the outlet mouth (3402) of the separator device (34) and the suction inlet opening (320) of the sucker device (32), wherein said sucker device (32) is suitable for sucking up the clean air flow exiting from the outlet mouth (3402) of the separator device (34).

13. Agricultural equipment (1) according to claims 3 and 7, comprising blowing connection means (700) suitable for ensuring a fluidic connection between the suction outlet opening (322) of the sucker device (32) and the at least one blowing mouth (40) of the at least one operating group (4), wherein the sucker device (32) generates the blowing flow required to be directed towards the crop.

14. Agricultural equipment (1) according to any one of the preceding claims, comprising operating group fastening means (100) suitable for mechanically connecting the at least one operating group (4) to a load-bearing structure (10) of the agricultural equipment (1), wherein said operating group fastening means (100) comprise at least one fastening structure (410) connected to the at least one operating group (4) and an arm (120), wherein said arm (120) is suitable for connecting the fastening structure (410) to the load-bearing structure (10) .

15. Agricultural equipment (1) according to any one of the preceding claims, comprising a front operating group (4') and at least one side operating group (4"), wherein said front operating group (4') is connected to the load-bearing structure (10) by means of the arm (120) which is fixed with respect to said load-bearing structure (10), and wherein said at least one side operating group (4'') is connected to the load-bearing structure (10) by means of the arm (120) which is movable with respect to said load-bearing structure (10).

16. Agricultural equipment (1) according to claim 15, wherein the arm (120) is rotatable about fastening means (110), preferably a pin.

17. Agricultural equipment (1) according to claim 1, wherein said agricultural equipment (1) is made in a portable agricultural equipment version (1') including a structure wearable on the user's shoulders and/or in a version including a structure suitable for being dragged on the ground by the user.
